# EUROPEAN PATENT SPECIFICATION

(11) **EP 3 244 106 B1**
(45) Date of publication and mention of the grant of the patent: **14.08.2019**
(21) Application number: 17168464.0
(22) Date of filing: 27.04.2017
(51) Int. Cl.: F16K 5/04, F16K 11/085, F16K 1/24

(54) **A REGULATING VALVE**
REGELVENTIL
SOUPAPE DE RÉGULATION

(30) Priority: 09.05.2016 SE 1650618
(43) Date of publication of application: 15.11.2017
(73) Proprietor: LK Armatur AB, 254 66 Helsingborg (SE)
(72) Inventor: BENCELL, Laszlo, 265 38 Åstorp (SE); IVARSSON, Ulf, 282 94 Hörja (SE)
(74) Representative: AWA Sweden AB

(56) References cited:
- CH-A- 96 037
- DE-U1- 29 914 869
- FR-A- 1 556 385
- US-A- 5 149 054
- US-A- 5 947 443
- US-A1- 2002 148 501
- US-A1- 2006 027 779

## Description

### FIELD OF THE INVENTION

The present invention relates to a regulating valve for controlling fluid communication between at least two ports.

### BACKGROUND OF THE INVENTION

A regulating valve for the control of a fluid flow typically comprises an internally hollow housing having ports for providing inlet and outlet of fluid. The housing has an opening to each port and the cross-sectional area of the opening, and hence the fluid flow to or from the port, is regulated by an obturator which is arranged in the hollow housing.

To allow rotation of the obturator there is a radial gap between the inner wall of the housing and the outer circumferential wall of the obturator. This gap will cause an inevitable leakage between the ports.

To reduce the leakage it is well known to arrange a flexible sealing in the interface between the inner wall of the housing and the obturator. The sealing may e.g. be arranged in the inner wall of the housing surrounding the opening or in the obturator. To fill the gap and to create a proper sealing, the sealing is slightly compressed.

Such sealing will however due to its inherent flexibility be subjected to a shearing force when the obturator is rotated. The shearing force is caused by the friction between the obturator and the sealing and/or between the sealing and the inner wall of the housing. The shearing may be pronounced if the flexible sealing comes in contact with the often very sharp circumferential edge of the opening.

In many cases the valve is operated on a very irregularly basis and the regulation valve may often be manually operated. When irregularly operated over time, it is not uncommon that the sealing may have started to age and also to creep to cause a relaxation. The creeping is a result of time, pressure and temperature. Aging will affect the flexible properties negatively and may in the worst case make the sealing brittle. Such flexible sealing will be more sensitive to shearing forces and also wear against sharp edges or high friction surfaces. Also, after a long period of non-activation, deposits, such as lime or oxide, may have been formed. Such deposits will temporarily increase the friction that must be overcome when operating the valve and hence there is a severe risk of a resulting leakage.

If the regulation valve is frequently operated, the operation is typically made by using an actuator such as a motor. In that case, creeping is not the major problem but rather an extensive frictional wear.

Accordingly, in order to maintain a proper sealing effect over time, the flexible sealing must be replaced to avoid leakage.

To protect the flexible sealing from shearing and friction, JP2010048404 suggests a solution in which the obturator comprises two or more block shaped seal plates made of a plastic material. The sealing plates are radially biased against the inner wall of the housing by a flexible member arranged between the obturator and the sealing plate. Similar solutions are disclosed in US2006242759 and US6308739B. Additional examples are disclosed in US 5 947 443 and US 2006/0027779. Even though such valves are less prone to leakage as seen over a shorter period of time than solutions where the flexible sealing is in direct contact with the inner wall of the housing, the valve sealing still exhibits a reduced life time since the seal plate will be subjected to wear. There is also a problem as seen over time with the plastic material creeping and causing leakage. In case the sealing plate instead should be made of a metallic material to account for these problems, that would at the same time have a negative impact on the flexibility and hence also the sealing.

### SUMMARY OF THE INVENTION

It is an object of the present invention to provide a regulating valve exhibiting a low degree of inevitable leakage by providing and maintaining an even contact pressure between the sealing and the inner wall of the housing. Also, the regulating valve should be allowed to be operated with a low torque while still providing a low leakage. It is also an object that the regulating valve should be cost effective to manufacture.

According to a first aspect, the invention relates to a regulating valve according to claim 1.

By the present solution, a valve sealing having a prolonged working life is provided for.

The surface adapted to sealingly abut the circumferential inner wall of the housing, and more specifically the area encircling the opening to be sealed-off, is provided by the thin walled sealing member. The thin walled sealing member should have a thickness that makes it flexible enough to allow it to, by the action of the biasing member, adapt its shape to sealingly abut the inner wall of the housing. Still the thickness should be high enough to provide a stiffness that prevents the thin walled sealing member from bulging into the opening as a consequence of the biasing means acting on the rear side of the thin walled sealing member. Any such bulging will cause a higher torque when operating the valve and may also cause a leakage. It is to be understood that the thickness depends on the material chosen. The thin walled sealing member is made of stainless steel having a thickness of 0.1-0.5 mm and more preferred 0.15-0.35 mm. Such regulating valve is dimensioned for a pressure difference of 10 bar (1000 kPa) bar and an obturator having an outer diameter in the range of 15-100 mm.

The thin walled sealing member will be able to resist frictional wear occurring when operating the valve. This is especially the case if the operation is made on an irregular basis. During a long time of in-operation, there is a risk of build-up of deposits such as lime and oxides which initially must be overcome when operating the valve anew. The latter is a typical example of when a prior art regulating valve starts to leak or jam since the flexible sealing has crept and aged and thereby lost its flexible and sealing properties.

The thin walled sealing member, when biased in the radial direction, may have a radius corresponding to the radius of the circumferential inner wall of the housing. Thereby the thin walled sealing member will sealingly engage the circumferential inner wall of the housing. Even if the thin walled sealing member in its unbiased condition should have a radius that is slightly smaller or slightly larger than the radius of the housing, the biasing member will take care of and correct such differences when acting on the thin walled sealing member.

The thin walled sealing member may be made of a metallic alloy different from a metallic material or metallic alloy of the housing. Thereby no substantial cladding effects will arise. As a non-limiting example, the sheet metal sealing member is made of stainless steel whereas the housing may be made of brass.

The longitudinal edges of the thin walled sealing member, as seen in the axial direction, may be bent towards the supporting member. The bent edges provide a rigidity against bulging. Also, the bent edges prevent the thin walled sealing member from engaging and flexing into the peripheral edge of an opening as the obturator is rotated to operate the valve.

The support member may delimit a cross sectional area exceeding the cross sectional area of the opening of the housing to be regulated. Thereby, the thin walled sealing member will not be forced by the support member to bulge into the opening but rather to sealingly abut the area surrounding the opening.

The thin walled sealing member may be mounted to the support member by a locking arrangement allowing the thin walled sealing member to be displaced in the radial direction in view of the longitudinal centre axis of the housing while being prevented from rotational displacement in view of the support member.

The locking arrangement may comprise a projection engaging recess, wherein the projection and the recess each have a longitudinal extension in parallel with the longitudinal centre axis of the housing and wherein the locking arrangement is arranged along a longitudinal centre line of the thin walled sealing member. Alternatively, the locking arrangement may comprise a projection engaging a recess, wherein the projection and the recess each have a longitudinal extension perpendicularly to the longitudinal centre axis of the housing. No matter extension, any misalignment of the sealing pressure is avoided. The projection may by way of example be formed by a bar.

The projection may be arranged on the thin walled sealing member and the recess may be arranged on the support member, or alternatively the recess may be arranged on the thin walled sealing member and the projection may be arranged on the support member. The projection may engage the recess by e.g. a snap-lock to facilitate assembling of the valve components. The projection may also be freely arranged in the recess.

The support member may in its surface facing the thin walled sealing member comprise a groove, said groove being adapted to receive a biasing member; or alternatively the support member in its surface facing the thin walled sealing member may comprise a plurality of recesses, each recess being adapted to receive a biasing member. The groove will prevent the biasing member from displacing in the circumferential direction during operation of the regulating valve. Also, the mounting of the valve parts may be facilitated since the groove or recess will keep the biasing member in position. Further, the groove or recesses may be arranged encircling the locking arrangement whereby a uniform pressure distribution is provided for.

The support member may be integral with the obturator. The obturator and support member may e.g. be formed in one unitary piece by injection molding.

The obturator may comprise an axial shaft arranged to extend along the longitudinal center axis, and a radial shaft which at its free end is provided with a support member, and wherein the support member supports the biasing member and the thin walled sealing member.

The biasing member may be provided as a separate member or be integrated in the support member. The integration may e.g. be made by so called two-component injection molding, welding, soldering or adhesive.

It is noted that the invention relates to all possible combinations of features recited in the claims.

### BRIEF DESCRIPTION OF THE DRAWINGS

These and other aspects of the present invention will now be described in more detail, with reference to the appended drawings showing embodiments of the invention.
Fig. 1 is an exploded view of the regulating valve with its components.
Fig. 2 discloses one embodiment of the obturator with the thin walled sealing member mounted thereto.
Fig.3 discloses a cross section of the housing and an obturator mounted therein.
Fig. 4 discloses highly schematically a second embodiment of an obturator and thin walled sealing member.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

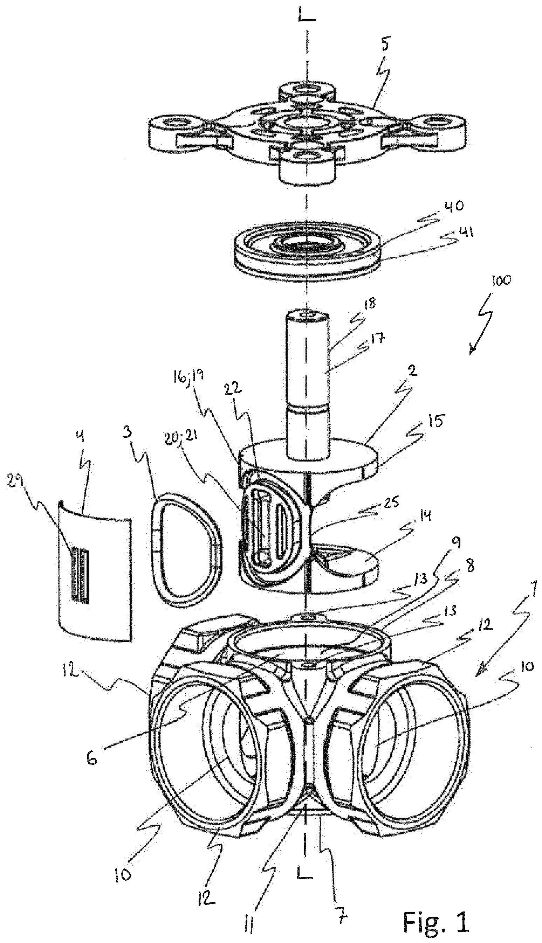

Starting with Fig. 1 an exploded view of the regulating valve 100 with its components is disclosed. In the following the regulating valve will be referred to as the valve. The valve 100 comprises in principle a housing 1, an obturator 2, a biasing member 3, a thin walled sealing member 4 and a mounting flange 5.

The housing 1 is formed as a casted unitary body. The skilled person will understand that the housing 1 may be formed e.g. by joining two or more parts or by machining, hot stamping or injection molding. The housing 1 may be made of e.g. brass or copper but it is also to be understood that other metals, metal alloys or polymeric materials may be used.

The housing 1 comprises a valve chamber 6. The valve chamber 6 has a rotational symmetrical cylindrical extension as seen along a longitudinal centre axis L. The valve chamber 6 is defined by a bottom wall 7, an opposing open top end 8 allowing insertion of the obturator 2 and a circumferential inner wall 9 that extends between and interconnects the bottom wall 7 and the top end 8. The circumferential inner wall 9 may be machined at least partly. The circumferential inner wall 9 comprises in the disclosed embodiment three through openings 10. The openings 10 are adapted to form either inlets or outlets depending on how the valve is used. The number of openings 10 should be at least two, i.e. one inlet opening and one outlet opening.

The transition between the circumferential inner wall 9 and the peripheral edge of an individual opening 10 may be provided as a sharp edge or be provided with a broken edge.

The outer wall 11 of the housing 1 is provided with ports 12. Each port 12 communicates with the valve chamber 6 via a respective opening 10. Each port 12 may be provided with a mounting means such as a threaded portion (not disclosed).

The valve 100 may be arranged to be operated by an external device (not disclosed) such as a motor. Such external device is mounted to the valve via the mounting flange 5. The mounting flange 5 may be mounted to the housing 1 by sealingly abutting the open top end 8 of the housing 1. The mounting flange 5 may be mounted to the housing 1 by way of e.g. screws (not disclosed) arranged to be received in corresponding mounting holes 13 of the housing 1.

The mounting flange 5 may be replaced and/or combined with a top element 40 forming a lid. The top element 40 may be provided with circumferential sealing 41, such as an o-ring or the like arranged to sealingly abut and close off the open top end 8. Non-disclosed O-rings may also be used to seal against the housing 1 and the obturator 2.

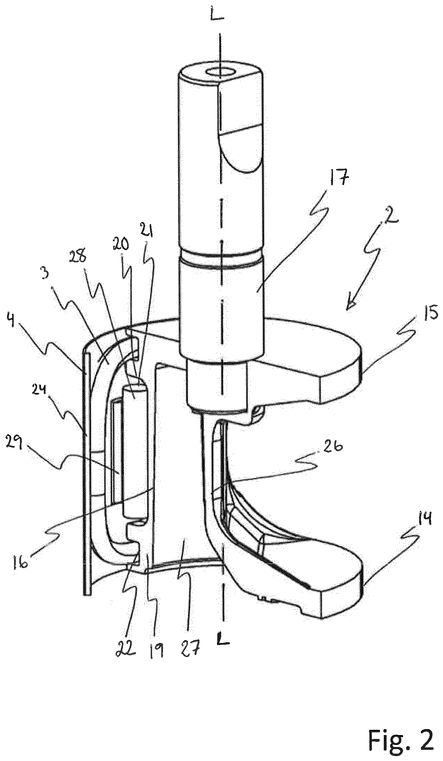

The valve 100 further comprises the obturator 2. The obturator 2 is preferably made by injection molding a plastic material. The obturator 2 has a longitudinal extension coinciding with the longitudinal center axis L of the valve 100. The obturator 2 is adapted to be received in the valve chamber 6 and to be rotated inside the valve chamber 6 around the longitudinal center axis L. The obturator 2 is also disclosed in Fig. 2 with the biasing member 3 and the thin walled sealing member 4 mounted thereto.

In the disclosed embodiment, the obturator 2 comprises a bottom portion 14, a top portion 15 and a side portion 16 extending between and interconnecting the bottom portion 14 and the top portion 15. Also, the top portion 15 and the bottom portion 14 do each have a disc shape with a radius corresponding to the radius of the circumferential inner wall 9 of the valve chamber 6. Thereby the obturator 2 will be radially supported by the circumferential inner wall 9 of the valve chamber 6 while being rotated. The skilled person will understand that the same effect may be provided for by using a geometry other than a disc shape. By way of example the disc shape may be replaced by sprockets providing local supports in the radial direction.

The longitudinal edges of the side portion 16 are preferably provided with a curvature 25 corresponding to the curvature of the edge of the openings 10 of the housing 1. Thereby, there will be no undue restriction of the fluid flowing from one opening to another.

As is best seen in Fig. 2, the obturator 2 may be structurally reinforced by a reinforcement 26 extending between the bottom portion 14 and the top portion 15. In the disclosed embodiment a recess 27 is formed between the reinforcement 26 and the side portion 16. The recess 27 may be omitted since it is a mere design feature.

The obturator 2 further comprises a shaft 17 supported by the top portion 15. The shaft 17 has an extension coinciding with the longitudinal centre axis L of the housing 1. The shaft 17 may be formed integral with the obturator 2 or be provided as a member to be mounted thereto. The shaft 17 comprises in its free end a connection portion 18 adapted to engage an external device (not disclosed) for operation of the valve, such as a motor or a knob.

The side portion 16 of the obturator 2 forms a support member 19. The support member 19 is arranged to support the thin walled sealing member 4 such that the thin walled sealing member 4 by the biasing member 3 may be biased in the radial direction with regards to the longitudinal centre axis L. Thus, the support member 19 acts as a dolly.

The support member 19 is integral with the obturator 2 and has a surface extension in the circumferential direction and in the axial direction. In the disclosed embodiment, the support member 19 delimits a cross sectional area exceeding the cross sectional area of the opening 10 to be regulated.

In the disclosed embodiment the support member 19 comprises a recess 20 in its surface adapted to face the thin walled sealing member 4. The recess 20 forms part of a locking arrangement 21 to be discussed below. The recess 20 extends in the longitudinal extension in parallel with the longitudinal centre axis L.

The support member 19 comprises, in its surface adapted to face the thin walled sealing member 4, a ring shaped groove 22 in which the ring shaped biasing member 3 is adapted to be received. The ring shaped groove 22 encircles the locking arrangement 21. It is to be understood that more than one groove 22 may be used and that the one or more grooves may have other extensions than a ring shape. The groove may have a continuous extension or an intermittent extension. Also, the groove 22 must not have an encircling extension. The groove 22 may by way of example be replaced by a plurality of recesses (not disclosed) which together form a pattern. It could also be replaced by straight grooves. No matter pattern and extension of the groove(s) 22 or recesses it is preferred that the biasing member(s) 3 to be received therein forms a uniform biasing of the thin walled sealing member 4 in the radial direction.

In the disclosed embodiment the biasing member 3 is a ring made of an elastic material. The elastic material may e.g. be rubber or plastic or a combination thereof. The biasing member 3 may also, with remained function be e.g. a coil spring or a plate spring.

The depth of the groove 22 or recess should be smaller than the radial thickness of the biasing member 3. When received in the groove 22 or recess, the biasing member 3 should be prevented from being displaced in all other directions but the radial direction as seen in view of the longitudinal extension of the centre axis L.

The thin walled sealing member 4 is provided as a single curved member adapted to be forced by the biasing member 3 in the radial direction to sealingly abut the circumferential inner wall 9 of the valve chamber 6 in an area surrounding the opening 10 to be regulated.

The radius of the thin walled sealing member 4, when biased in the radial direction, corresponds to the radius of the circumferential inner wall 4 of the housing 1. More precisely, the thin walled sealing member 4 will be forced by the biasing member 3 acting thereon to adapt its radius to the circumferential inner wall 4 to thereby sealingly abut the same and the area surrounding the opening 10.

The thin walled sealing member 4 is in the disclosed embodiment formed as an essentially rectangular member. It goes without saying that other geometries are possible, as long as the delimited area is large enough to completely cover and seal off the opening 10 to be regulated.

The longitudinal edges 24 of the thin walled sealing member 4, as seen in the axial direction, i.e. the leading and trailing edges, are bent in a direction facing the support member 19.

The thin walled sealing member 4 may e.g. be formed by sheet metal. It is preferred that the thin walled sealing member 4 is made of a metallic alloy different from a metallic material or metallic alloy of the housing. The thickness of the thin walled sealing member 4 is adapted to the intended use of the regulating valve. The thin walled sealing member 4 is made of stainless steel having a thickness of 0.1-0.5 mm and more preferred 0.15-0.35 mm. Such thin walled sealing member 4 is suitable for a regulating valve being dimensioned for a pressure difference of 10 bar (1000 kPa) and an obturator having an outer diameter in the range of 15-100 mm.

The thin walled sealing member 4 preferably has a uniform thickness.

As is best seen in Fig. 2, the thin walled sealing member 4 comprises on its surface which during use is adapted to face the support member 19, a projection 28 forming part of the locking arrangement 21. The projection 28 may e.g. be a bar welded to the thin walled sealing member 4. The projection 28 has a longitudinal extension in parallel with the longitudinal centre axis L of the housing 1. Further, the projection 28 is arranged along a longitudinal centre line of the thin walled sealing member. To facilitate positioning of the projection 28 before and during fixation, the thin walled sealing member may be provided with embossings 29. The projection 28 is arranged to be received in the corresponding recess 20 of the support member 19. By the locking arrangement 21 the thin walled sealing member 4 is allowed to be displaced in the radial direction in view of the support member 19 while being prevented from rotational displacement in view of the support member 19.

It goes without saying that the locking arrangement 21 may have other designs and other positions, with maintained function.

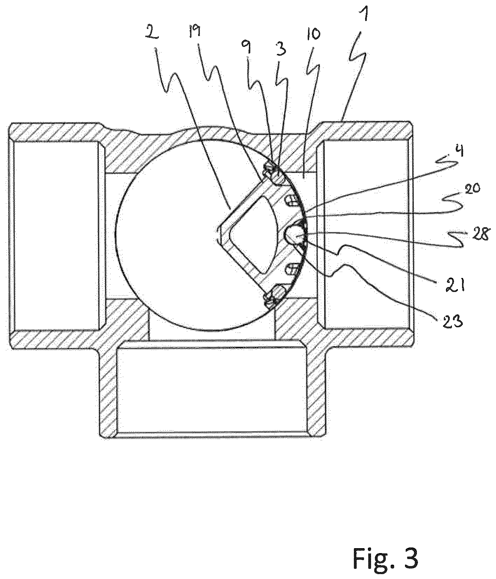

Now turning to Fig. 3, a schematic cross section of the housing 1 with the obturator 2, the biasing member 3 and the thin walled sealing member 4 is disclosed. The cross section is taken transverse the longitudinal centre axis L of the housing 1. The obturator 2 has been operated to a position in which the thin walled sealing member 4 completely covers an opening 10 in the circumferential inner wall 9.

The surface of the support member 19 is recessed in the radial direction to accommodate the thin walled sealing member 4. The depth of the radial recess 23 depends essentially on the thickness of the biasing member 3 as seen in the radial direction. The radial recess 23 should have a depth being deep enough to allow insertion of the obturator 2 together with the thin walled sealing member 4 and the compressed biasing member 3 into the valve chamber 6 along the longitudinal axis L, while at the same time, when properly inserted, the biasing member 3 should be allowed to slightly relax and thereby bias and hence displace the thin walled sealing member 4 in the radial direction to such extent that a fluid tight sealing between the circumferential inner wall 9 of the housing 1 and the thin walled sealing member 4 is provided for.

In other words, by the biasing member 3 being arranged in a position between the support member 19 and the rear wall of the thin walled sealing member, the inherent elasticity of the compressed biasing member 3 forces the thin walled sealing member 4 to sealingly abut the circumferential inner wall 9 of the housing 1 encircling the opening 10. During this biasing, the projection 28 forming part of the locking arrangement 21 is allowed to be displaced in the radial direction inside the recess 20.

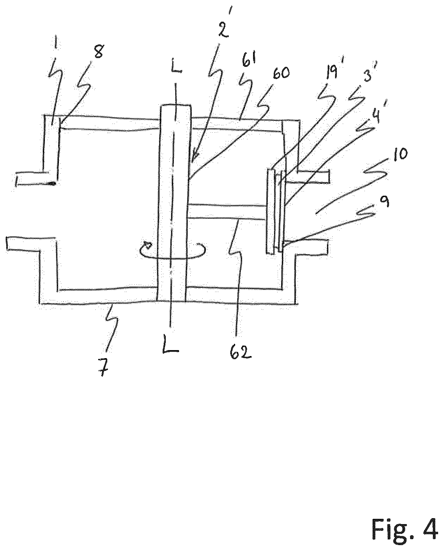

Now turning to Fig. 4, an arrangement with one possible embodiment of the obturator, the support member and the thin walled sealing member is disclosed highly schematically as mounted in a housing. The obturator 2' comprises an axial shaft 60 extending along the longitudinal centre axis L. The axial shaft 60 may be supported in the axial direction by the bottom wall 7 of the housing 1. Further, the obturator 2' is radially supported by a radial support member 61 adapted to engage the top end 8 of the housing 1. The radial support member 61 may also act as a lid.

The axial shaft 60 supports a radial shaft 62 which at its free end is provided with a support member 19'. The support member 19' has a surface extension in the circumferential direction and in the axial direction. The support member 19' in turn supports a biasing member 3' and a thin walled sealing member 4'. The biasing member 3' is arranged to act against the rear wall of the thin walled sealing member 4' to thereby bias the same to abut the circumferential inner wall 9 of the housing 1 and thereby seal off an opening 10 arranged therein. In this embodiment the biasing member 3' may be formed as one or several rings or pads made of a flexible material. It can also be provided by a spring coil or plate spring.

The thin walled sealing member 4' and its operation is in all relevant aspects the same as those previously described.

Variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The locking arrangement interlocking the thin walled sealing member and the support member may be provided as a snap lock, said snap lock allowing a radial movement of the sheet metal sealing member in view of the support member.

The locking arrangement 21 has been disclosed as a recess 20 and projection 28 extending in a direction in parallel with the longitudinal center line L. The locking arrangement 21 may have other extensions such as a perpendicular extension as long as the thin walled sealing member 4, 4' is allowed to be displaced in the radial direction when acted upon by the biasing member 3, 3'.

No matter form of the obturator 2, 2', the skilled person will understand that the biasing member 3, 3'may have any extension across the support member 19, 19' as long as it forces the thin walled sealing member 4, 4' to sealingly abut the inner wall of the housing 1.

Although the support member 19, 19' has been disclosed as delimiting a cross sectional area that exceeds the cross sectional area of the opening 10 to be regulated, the skilled person will understand that the delimited cross sectional area may be smaller as long as the support member 19, 19' may interact with the biasing member 3, 3' so that the thin walled sealing member 4, 4' sealingly abuts the inner wall of the housing 1.

The biasing member 3, 3' may be provided as a separate member or be integrated in the support member 19, 19'. The integration may e.g. be made by so called two-component injection molding, welding, soldering or adhesive.

## Claims

1. A regulating valve (100), comprising
an internally hollow housing (1) allowing fluid communication between at least two ports (12) of the housing (1), and which housing (1) comprises a circumferential inner wall (9) having a rotational symmetrical cylindrical extension as seen along a longitudinal centre axis (L), said circumferential inner wall (9) having an opening (10) to each port, and wherein the cross-sectional area of the opening (10) is arranged to be regulated for controlling fluid communication through the opening (10);
an obturator (2, 2') which is rotatable about a rotational axis in relation to the opening (10) to be regulated, said rotational axis coinciding with the longitudinal centre axis (L) of the housing (1), and wherein the obturator (2, 2') comprises a support member (19, 19') having a surface extension in the circumferential direction and in the axial direction;
a thin walled sealing member (4, 4') made of stainless steel and having a surface extension in the circumferential direction and in the axial direction, wherein said surface extension delimits a sealing area exceeding the cross sectional area of the opening (10) of the housing (1) to be regulated;
and
a biasing member (3) being arranged in a position between the support member (19, 19') and a rear wall of the thin walled sealing member (4, 4'); wherein
the thin walled sealing member (4, 4') is supported by the support member (19, 19') and biased by the biasing member (3) in the radial direction with regards to the longitudinal centre axis (L) of the housing (1) to thereby sealingly abut the circumferential inner wall (9) of the housing (1);
**characterized in that**,
the regulating valve is dimensioned for a pressure difference of 10 bar (1000 kPa) and the outer diameter of the obturator (2, 2') is in the range of 15-100 mm;
the thin walled sealing member (4, 4') has a thickness of 0.1-0.5 mm and more preferred 0.15-0.35 mm; and
the biasing member (3) is separate from the thin walled sealing member (4, 4').

2. The regulating valve according to claim 1, wherein the thin walled sealing member (4, 4'), when biased in the radial direction, has a radius corresponding to the radius of the circumferential inner wall (9) of the housing (1).

3. The regulating valve according to claim 1 or 2, wherein the thin walled sealing member (4, 4') is made of a metallic alloy different from a metallic material or metallic alloy of the housing (1).

4. The regulating valve according to any of the preceding claims, wherein
the longitudinal edges (24) of the thin walled sealing member (4, 4'), as seen in the axial direction, are bent towards the supporting member (19, 19').

5. The regulating valve according to any of the preceding claims, wherein
the support member (19, 19') delimits a cross sectional area exceeding the cross sectional area of the opening (10) of the housing (1) to be regulated.

6. The regulating valve according to any of the preceding claims, wherein
the thin walled sealing member (4) is mounted to the support member (19, 19') by a locking arrangement (21) allowing the thin walled sealing member (4) to be displaced in the radial direction in view of the longitudinal centre axis (L) of the housing (1) while being prevented from rotational displacement in view of the support member (19, 19').

7. The regulating valve according to claim 6, wherein the locking arrangement (21) comprises a projection (28) engaging a recess (20), wherein the projection (28) and the recess (20) each have a longitudinal extension in parallel with the longitudinal centre axis (L) of the housing (1).

8. The regulating valve according to claim 7, wherein the locking arrangement (21) is arranged along a longitudinal centre line of the thin walled sealing member (4).

9. The regulating valve according to claim 7 or 8, wherein the projection (28) is arranged on the thin walled sealing member (4) and the recess (20) is arranged on the support member (19), or wherein the recess (20) is arranged on the thin walled sealing member (4) and the projection (28) is arranged on the support member (19).

10. The regulating valve according to any of claims 6-9, wherein the support member (19) in its surface facing the thin walled sealing member (4) comprises a groove (22), said groove (22) being adapted to receive the biasing member (3); or
wherein the support member (19) in its surface facing the thin walled sealing member (4) comprises a plurality of recesses, each recess being adapted to receive the biasing member (3).

11. The regulating valve according to any of the preceding claims, wherein the support member (19, 19') is integral with the obturator (2).

12. The regulating valve according to any of claims 1-6, wherein
the obturator (2') comprises an axial shaft (60) arranged to extend along the longitudinal center axis (L), and a radial shaft (62) which at its free end is provided with a support member (19'), and wherein the support member (19') supports the biasing member (3') and the thin walled sealing member (4').

13. The regulating valve according to any of the preceding claims, wherein
the biasing member (3') is provided as a separate member or is integrated in the support member (19, 19').

## Patentansprüche

1. Regelventil (100), umfassend
ein im Inneren hohles Gehäuse (1), das eine Fluidverbindung zwischen mindestens zwei Anschlüssen (12) des Gehäuses (1) ermöglicht und wobei das Gehäuse (1) eine umlaufende Innenwand (9) umfasst, die eine rotationssymmetrische zylindrische Verlängerung aufweist, wie sie entlang einer Längsmittelachse (L) zu sehen ist, wobei die umlaufende Innenwand (9) eine Öffnung (10) zu jedem Anschluss aufweist, und wobei die Querschnittsfläche der Öffnung (10) angeordnet ist, um die Fluidverbindung durch die Öffnung (10) regelbar zu steuern;
einen Obturator (2, 2'), der um eine Drehachse relativ zu der zu regelnden Öffnung (10) drehbar ist, wobei die Drehachse mit der Längsmittelachse (L) des Gehäuses (1) zusammenfällt, und wobei der Obturator (2, 2') ein Stützelement (19, 19') mit einer Flächenverlängerung in Umfangsrichtung und in axialer Richtung aufweist;
ein dünnwandiges Dichtungselement (4, 4'), das aus Edelstahl hergestellt ist, und eine Flächenverlängerung in der Umfangsrichtung und in axialer Richtung aufweist, wobei die Flächenverlängerung einen Dichtungsbereich begrenzt, der die Querschnittsfläche der Öffnung (10) des zu regelnden Gehäuses (1) überschreitet;
und
ein Vorspannelement (3), das in einer Position zwischen dem Stützelement (19, 19') und einer Rückwand des dünnwandigen Dichtungselements (4, 4') angeordnet ist;
wobei
das dünnwandige Dichtungselement (4, 4') durch das Stützelement (19, 19') gestützt wird und durch das Vorspannelement (3) in radialer Richtung in Bezug auf die Längsmittelachse (L) des Gehäuses (1) vorgespannt wird, um dadurch abdichtend an der umlaufenden Innenwand (9) des Gehäuses (1) anzuliegen;
**dadurch gekennzeichnet, dass**
das Regelventil für eine Druckdifferenz von 10 bar (1000 kPa) und der Außendurchmesser des Obturators (2, 2') im Bereich von 15-100 mm liegt;
das dünnwandige Dichtungselement (4, 4') eine Dicke von 0,1-0,5 mm und mehr bevorzugt von 0,15-0,35 mm aufweist;
und das Vorspannelement (3) von dem dünnwandigen Dichtungselement (4, 4') getrennt ist.

2. Regelventil nach Anspruch 1, wobei das dünnwandige Dichtungselement (4, 4'), wenn es in radialer Richtung vorgespannt ist, einen Radius aufweist, der dem Radius der umlaufenden Innenwand (9) des Gehäuses (1) entspricht.

3. Regelventil nach Anspruch 1 oder 2, wobei das dünnwandige Dichtungselement (4, 4') aus einer Metalllegierung hergestellt ist, die sich von einem metallischen Material oder einer Metalllegierung des Gehäuses (1) unterscheidet.

4. Regelventil nach einem der vorhergehenden Ansprüche, wobei die Längskanten (24) des dünnwandigen Dichtungselements (4, 4'), wie sie in axialer Richtung zu sehen sind, zum Stützelement (19, 19') hingebogen sind.

5. Regelventil nach einem der vorhergehenden Ansprüche, wobei das Stützelement (19, 19') eine Querschnittsfläche begrenzt, die die Querschnittsfläche der Öffnung (10) des zu regelnden Gehäuses (1) überschreitet.

6. Regelventil nach einem der vorhergehenden Ansprüche, wobei das dünnwandige Dichtungselement (4) an das Stützelement (19, 19') durch eine Verriegelungsanordnung (21) angebracht ist, so dass das dünnwandige Dichtungselement (4) in der radialen Richtung in Bezug auf die Längsmittelachse (L) des Gehäuses (1) verschoben werden kann, während es im Hinblick auf das Stützelement (19, 19') an einer Drehverschiebung gehindert wird.

7. Regelventil nach Anspruch 6, wobei die Verriegelungsanordnung (21) einen Vorsprung (28) umfasst, der in eine Aussparung (20) eingreift, wobei der Vorsprung (28) und die Aussparung (20) jeweils eine Längserstreckung parallel zur Längsmittelachse (L) des Gehäuses (1) aufweisen.

8. Regelventil nach Anspruch 7, wobei die Verriegelungsanordnung (21) entlang einer Längsmittellinie des dünnwandigen Dichtungselements (4) angeordnet ist.

9. Regelventil nach Anspruch 7 oder 8, wobei der Vorsprung (28) auf dem dünnwandigen Dichtungselement (4) angeordnet ist und die Aussparung (20) auf dem Stützelement (19) angeordnet ist, oder wobei die Aussparung (20) auf dem dünnwandige Dichtungselement (4) angeordnet ist und der Vorsprung (28) auf dem Stützelement (19) angeordnet ist.

10. Regelventil nach einem der Ansprüche 6-9, wobei das Stützelement (19) in seiner dem dünnwandigen Dichtungselement (4) zugewandten Oberfläche eine Nut (22) aufweist, wobei die Nut (22) ausgebildet ist, das Vorspannelement (3) aufzunehmen; oder
wobei das Stützelement (19) in seiner dem dünnwandigen Dichtungselement (4) zugewandten Oberfläche mehrere Aussparungen aufweist, wobei jede Aussparung ausgebildet ist, das Vorspannelement (3) aufzunehmen.

11. Regelventil nach einem der vorhergehenden Ansprüche, wobei das Stützelement (19, 19') einstückig mit dem Obturator (2) ausgebildet ist.

12. Regelventil nach einem der Ansprüche 1-6, wobei der Obturator (2') eine axiale Welle (60) umfasst, die sich entlang der Längsmittelachse (L) erstreckt, und eine radiale Welle (62), die an ihrem freien Ende mit einem Stützelement (19') versehen ist, und wobei das Stützelement (19') das Vorspannelement (3') und das dünnwandige Dichtungselement (4') trägt.

13. Regelventil nach einem der vorhergehenden Ansprüche, wobei das Vorspannelement (3') als separates Element bereitgestellt ist oder in dem Stützelement (19, 19') integriert ist.

## Revendications

1. Soupape de régulation (100) comprenant
un boîtier (1) creux intérieurement, permettant une communication fluidique entre au moins deux orifices (12) du boîtier (1), ledit boîtier (1) comprenant une paroi intérieure circonférentielle (9) présentant une extension cylindrique symétrique rotative, vue le long d'un axe central longitudinal (L), ladite paroi intérieure circonférentielle (9) présentant une ouverture (10) vers chaque orifice, et l'aire de section transversale de l'ouverture (10) étant conçue pour être régulée afin de commander la communication fluidique à travers l'ouverture (10) ;
un obturateur (2, 2') rotatif autour d'un axe de rotation par rapport à l'ouverture (10) à réguler, ledit axe de rotation coïncidant avec l'axe central longitudinal (L) du boîtier (1), et l'obturateur (2, 2') comprenant un élément de support (19, 19') présentant une extension de surface dans la direction circonférentielle et dans la direction axiale ;
un élément d'étanchéité à fines parois (4, 4'), constitué d'acier inoxydable et présentant une extension de surface dans la direction circonférentielle et dans la direction axiale, ladite extension de surface délimitant une zone d'étanchéité dépassant l'aire de section transversale de l'ouverture (10) du boîtier (1) à réguler ;
et
un élément de précontrainte (3) disposé à une position entre l'élément de support (19, 19') et une paroi arrière de l'élément d'étanchéité à fines parois (4, 4') ;
dans laquelle
l'élément d'étanchéité à fines parois (4, 4') est supporté par l'élément de support (19, 19') et précontraint par l'élément de précontrainte (3) dans la direction radiale par rapport à l'axe central longitudinal (L) du boîtier (1) pour ainsi buter de façon étanche contre la paroi intérieure circonférentielle (9) du boîtier (1) ;
**caractérisée en ce que**
la soupape de régulation est dimensionnée pour une différence de pression de 10 bar (1000 kPa) et le diamètre extérieur de l'obturateur (2, 2') est compris entre 15 et 100 mm ;
l'élément d'étanchéité à fines parois (4, 4') présente une épaisseur de 0,1 à 0,5 mm et plus avantageusement de 0,15 à 0,35 mm ; et
l'élément de précontrainte (3) est séparé de l'élément d'étanchéité à fines parois (4, 4').

2. Soupape de régulation selon la revendication 1, dans laquelle l'élément d'étanchéité à fines parois (4, 4'), lorsqu'il est précontraint dans la direction radiale, présente un rayon correspondant au rayon de la paroi intérieure circonférentielle (9) du boîtier (1).

3. Soupape de régulation selon la revendication 1 ou 2, dans laquelle l'élément d'étanchéité à fines parois (4, 4') est constitué d'un alliage métallique différent d'un matériau métallique ou d'un alliage métallique du boîtier (1).

4. Soupape de régulation selon l'une quelconque des revendications précédentes, dans laquelle les bords longitudinaux (24) de l'élément d'étanchéité à fines parois (4, 4'), vus dans la direction axiale, sont courbés vers l'élément de support (19, 19').

5. Soupape de régulation selon l'une quelconque des revendications précédentes, dans laquelle l'élément de support (19, 19') délimite une aire de section transversale dépassant l'aire de section transversale de l'ouverture (10) du boîtier (1) à réguler.

6. Soupape de régulation selon l'une quelconque des revendications précédentes, dans laquelle l'élément d'étanchéité à fines parois (4) est monté sur l'élément de support (19, 19') par un ensemble de verrouillage (21) permettant un déplacement de l'élément d'étanchéité à fines parois (4) dans la direction radiale par rapport à l'axe central longitudinal (L) du boîtier (1) tout en empêchant un déplacement rotatif de celui-ci par rapport à l'élément de support (19, 19').

7. Soupape de régulation selon la revendication 6, dans laquelle l'ensemble de verrouillage (21) comprend une saillie (28) s'engageant dans une cavité (20), la saillie (28) et la cavité (20) présentant respectivement une extension longitudinale parallèle à l'axe central longitudinal (L) du boîtier (1).

8. Soupape de régulation selon la revendication 7, dans laquelle l'ensemble de verrouillage (21) est disposé le long d'une ligne centrale longitudinale de l'élément d'étanchéité à fines parois (4).

9. Soupape de régulation selon la revendication 7 ou 8, dans laquelle la saillie (28) est disposée sur l'élément d'étanchéité à fines parois (4) et la cavité (20) est disposée sur l'élément de support (19), ou dans laquelle la cavité (20) est disposée sur l'élément d'étanchéité à fines parois (4) et la saillie (28) est disposée sur l'élément de support (19).

10. Soupape de régulation selon l'une quelconque des revendications 6 à 9, dans laquelle l'élément de support (19), dans sa surface tournée vers l'élément d'étanchéité à fines parois (4), comprend une rainure (22), ladite rainure (22) étant adaptée pour recevoir l'élément de précontrainte (3) ; ou
dans laquelle l'élément de support (19), dans sa surface tournée vers l'élément d'étanchéité à fines parois (4), comprend une pluralité de cavités, chaque cavité étant adaptée pour recevoir l'élément de précontrainte (3).

11. Soupape de régulation selon l'une quelconque des revendications précédentes, dans laquelle l'élément de support (19, 19') est intégré à l'obturateur (2).

12. Soupape de régulation selon l'une quelconque des revendications 1 à 6, dans laquelle l'obturateur (2') comprend un arbre axial (60) disposé de manière à s'étendre le long de l'axe central longitudinal (L), et un arbre radial (62) doté d'un élément de support (19') à son extrémité libre, et dans laquelle l'élément de support (19') supporte l'élément de précontrainte (3') et l'élément d'étanchéité à fines parois (4').

13. Soupape de régulation selon l'une quelconque des revendications précédentes, dans laquelle l'élément de précontrainte (3') se présente comme un élément séparé ou est intégré dans l'élément de support (19, 19').
